# EUROPÄISCHE PATENTSCHRIFT

(11) **EP 0 481 326 B1**
(45) Veröffentlichungstag und Bekanntmachung des Hinweises auf die Patenterteilung: **10.05.1995**
(21) Anmeldenummer: 91117087.6
(22) Anmeldetag: 08.10.1991
(51) Int. Cl.: H02G 3/22

(54) **Spannvorrichtung**
Clamping device
Dispositif de serrage

(30) Priorität: 18.10.1990 DE 9014426 U
(43) Veröffentlichungstag der Anmeldung: 22.04.1992
(73) Patentinhaber: Wolf, Thomas, Dr., D-35510 Butzbach (DE); Klauer, Rainer, D-35619 Braunfels (DE)
(72) Erfinder: Wolf, Thomas, Dr., D-35510 Butzbach (DE); Klauer, Rainer, D-35619 Braunfels (DE)
(74) Vertreter: Schlagwein, Udo, Dipl.-Ing.

(56) Entgegenhaltungen:
- DE-U- 8 807 280
- GB-A- 1 049 621

## Beschreibung

Die Erfindung betrifft eine Spannvorrichtung für eine in einem Rahmen angeordnete Preßplatte einer Kabeldurchführung, wobei die Vorrichtung zwei mit ihrer jeweiligen Hypotenuse aufeinanderliegende, relativ zueinander mittels einer Betätigungseinheit verschiebbare, zwischen den zu spreizenden Teilen einschiebbare Keile aufweist.

Eine Spannvorrichtung der vorstehenden Art ist Gegenstand der GB-A-1,049,621. Die in dieser Schrift gezeigte Spannvorrichtung ist als Bestandteil einer Kabeldurchführung ausgebildet. Diese Kabeldurchführung hat in einem Rahmen eine auf elastische Kabelaufnahmen abgestützte, in Richtung der Kabelaufnahmen verschiebliche Preßplatte. Zum Abdichten der Kabeldurchführung muß die Preßplatte relativ zum Rahmen gegen die Kabelaufnahmen gespannt werden. Hierzu sind bei der bekannten Kabeldurchführung die beiden Keile als Bestandteil der Kabeldurchführung ausgebildet und mittels einer Schraube als Betätigungseinheit derart zu verschieben, daß durch eine dann auftretende Spreizwirkung der Keile die Preßplatte relativ zum Rahmen gegen die Kabelaufnahmen gespannt wird. Das Spannen der Preßplatte mittels dieser Schraube innerhalb des Rahmens ist umständlich.

Auch die DE-U-8 807 280 beschreibt eine Kabeldurchführung, bei der ein einen Bestandteil der Kabeldurchführung bildender Keil auf einer Schrägfläche eines dort als Preßvorrichtung bezeichneten, ebenfalls einen Bestandteil der Kabeldurchführung bildendes Bauteils mittels einer Schraube als Betätigungseinheit verschiebbar ist, um eine Spreizwirkung zu erzeugen.

Der Erfindung liegt die Aufgabe zugrunde, eine Spannvorrichtung der eingangs genannten Art so auszubilden, daß das Spannen der Preßplatte möglichst einfach und rasch durchführbar ist.

Dieses Problem wird erfindungsgemäß dadurch gelöst, daß die Spannvorrichtung als Betätigungseinheit eine Kolben-Zylinder-Einheit hat, daß einer der Keile unmittelbar an der Kolbenstange der Kolben-Zylinder-Einheit befestigt und zum Spreizen der Keile von der Kolben-Zylinder-Einheit weg beweglich ist und der zweite, auf der Hypotenuse dieses Keiles aufliegende Keil mittels einer mit dem zweiten Keil und der Kolben-Zylinder-Einheit gelenkig verbundenen Lasche auf dem ersten Keil gehalten ist.

Eine solche Spannvorrichtung wird zwischen der Preßplatte und dem Rahmen der Kabeldurchführung eingeschoben und dann betätigt, um die erforderliche Spannwirkung zu erzielen. Da die Betätigungseinheit Teil der Spannvorrichtung ist, braucht man nicht mehr mit einem Schraubenschlüssel im schwer zugänglichen Bereich des Rahmens zu arbeiten. Weiterhin kann bei Verwendung der erfindungsgemäßen Spannvorrichtung der Rahmen einfacher gestaltet werden, weil er keine Schraube zum Spannen der Preßplatte benötigt. Bei Verwendung der erfindungsgemäßen Spannvorrichtung werden nach dem Spannen der Preßplatte im Rahmen beispielsweise Distanzstifte eingesetzt, bevor die Spannvorrichtung entspannt und aus dem Rahmen herausgezogen wird.

Die Ausbildung der Betätigungseinheit als Kolben-Zylinder-Einheit erlaubt es, das Spannen sehr rasch und durch Festlegung des Druckes des Druckmittels zwangsläufig mit der richtigen Spannkraft durchzuführen.

Der Erhöhung der Stabilität der Spannvorrichtung dient es, wenn der erste Keil auf einer an der Kolben-Zylinder-Einheit befestigten Führungszunge verschieblich gehalten ist.

Ein seitliches Verrutschen der beiden aufeinander gleitenden Keile kann auf sehr einfache Weise ausgeschlossen werden, wenn der zweite Keil mit zwei seitlichen Wangen über die Seitenflächen des ersten Keiles geführt und an jeder Wange jeweils eine Lasche gelenkig angeschlossen ist.

Das Herausziehen der Vorrichtung aus der Kabeldurchführung nach dem Spannen ihrer Preßplatte ist ohne größeren Kraftaufwand möglich, wenn zum Rückbewegen der Keile der kolbenstangenseitige Raum der Kolben-Zylinder-Einheit druckbeaufschlagbar ausgebildet ist.

Ein Verkanten der Preßplatte beim Spannen kann durch einen Kraftangriff an zwei verschiedenen Stellen verhindert werden, indem gemäß einer anderen Ausgestaltung der Erfindung auf einem Träger parallel nebeneinander zwei Kolben-Zylinder-Einheiten mit den aufeinander verschiebbaren Keilen vorgesehen sind. Eine solche Ausführungsform bietet zusätzlich den Vorteil, daß die Spannkraft dort angreift, wo die Kabelaufnahmen die Gegenkräfte erzeugen. Dadurch wird die Preßplatte nicht oder weniger auf Biegung beansprucht, so daß die Gefahr eines Brechens geringer ist. Weiterhin ist bei dieser Ausführungsform vorteilhaft, daß für das Spannen der Preßplatte ihre beiden Randbereiche genutzt werden, weil bei einer zur Mitte hin im Querschnitt stärkeren Preßplatte in den Randbereichen mehr Platz zum Einschieben der beiden Keilanordnungen besteht als im mittleren Bereich.

Die Erfindung läßt zahlreiche Ausführungsmöglichkeiten zu. Zur weiteren Verdeutlichung ihres Grundprinzips ist eine davon in der Zeichnung dargestellt und wird nachfolgend beschrieben. Die Zeichnung zeigt in
- Fig. 1: eine Draufsicht auf die erfindungsgemäße Spannvorrichtung,
- Fig. 2: eine Seitenansicht der Spannvorrichtung,
- Fig. 3: einen Längsschnitt durch die Spannvorrichtung entlang der Linie III - III in Fig. 1,
- Fig. 4: einen Schnitt durch einen oberen Keil der Spannvorrichtung,
- Fig. 5: eine Draufsicht auf den Keil nach Figur 4.

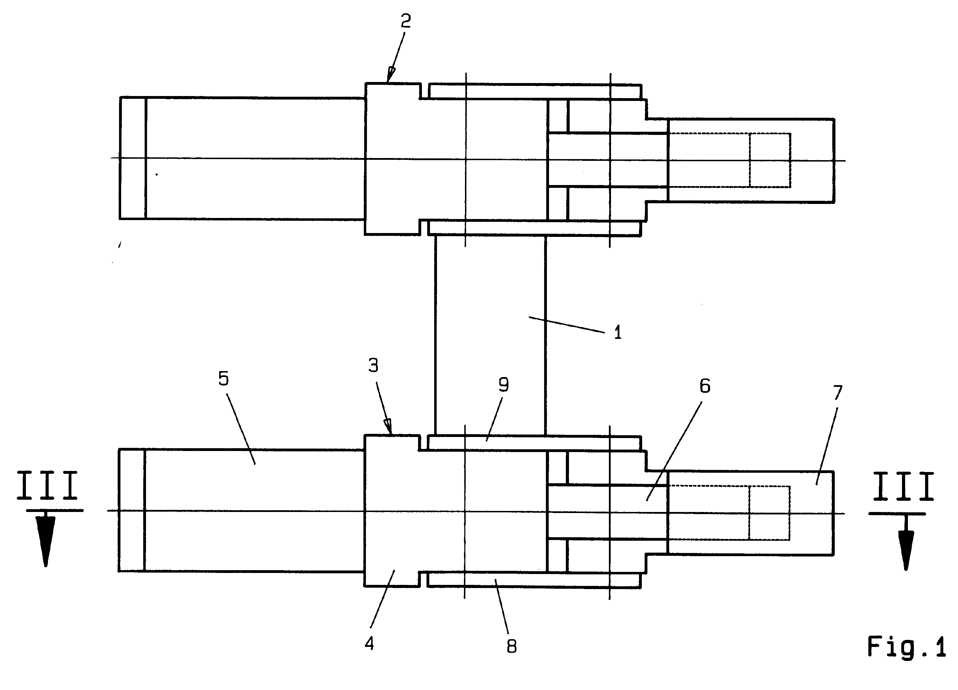

Die Figur 1 zeigt einen Träger 1, auf welchem parallel nebeneinander zwei Kolben-Zyinder-Einheiten 2, 3 befestigt sind. Jede Kolben-Zylinder-Einheit 2, 3 hat einen Grundkörper 4, in welchem ein hydraulisch beaufschlagbarer Zylinder 5 geschraubt ist. Durch Druckbeaufschlagung dieses Zylinders 5 wird ein sich mit zunehmendem Abstand vom Grundkörper 4 verjüngender Keil 6 vom Grundkörper 4 weg bewegt. Auf diesem Keil 6 liegt ein zweiter Keil 7 auf, der mittels zweier Laschen 8, 9 gelenkig mit dem Grundkörper 4 verbunden ist.

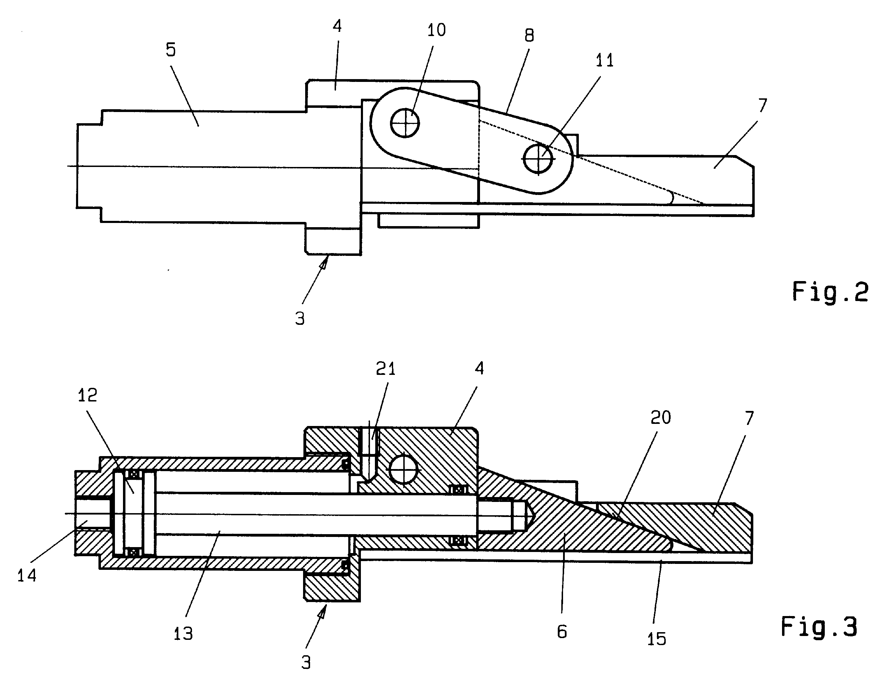

Die Figur 2 verdeutlicht, wie der Keil 7 mit dem Grundkörper 4 Verbindung hat. Zu sehen ist die Lasche 8, welche mit einem Gelenk 10 am Grundkörper 4 und einem Gelenk 11 am Keil 7 befestigt ist.

Die Funktionsweise der Spannvorrichtung ist anhand der Figur 3 leicht zu verstehen. Sie zeigt im Zylinder 5 einen Kolben 12, der mit einer Kolbenstange 13 den Grundkörper 4 durchdringt. Das freie Ende der Kolbenstange 13 ist mit dem Keil 6 fest verbunden. Wird der Zylinder 5 über einen Druckmitteleinlaß 14 von der der Kolbenstange 13 abgewandten Seite her druckbeaufschlagt, so verschiebt sich der Kolben 12 in der Zeichnung gesehen nach rechts, wodurch der Keil 6 vom Grundkörper 4 weg nach rechts wandert. Da der Keil 7 durch die in Figur 1 und 2 gezeigten Laschen 8, 9 mit dem Grundkörper 4 gekoppelt ist, kann er nicht mit dem Keil 6 nach rechts wandern. Er wird deshalb vom Keil 6 angehoben und bewegt sich dadurch unter Verschwenkung der Laschen 8, 9 entgegen dem Uhrzeigersinn nach oben, wodurch die gewünschte Spannwirkung erzeugt wird.

Zur Führung des Keiles 6 liegt dieser auf einer Führungszunge 15 auf, die vom Grundkörper 4 her nach vorn ragt. Bei Einsatz der Spannvorrichtung stützt man diese Führungszunge 15 gegen die eine der zu spreizenden Flächen und die Oberseite des Keiles 7 gegen die andere der zu spreizenden Flächen ab. Um nach dem Spannen die Keile 6, 7 wieder zurück in ihre Ausgangsstellung bewegen zu können, ist der Kolben 12 über einen Druckmitteleinlaß 21 von der Seite der Kolbenstange 13 druckmittelbeaufschlagbar, so daß der Kolben 12 einen Rückhub auszuführen vermag.

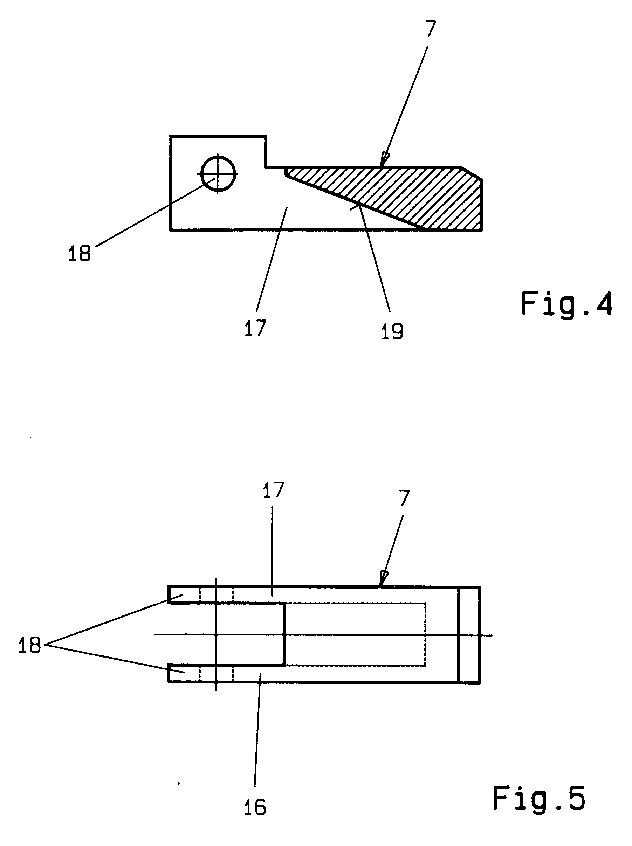

Die Figuren 4 und 5 lassen die Gestaltung des Keiles 7 genauer erkennen. Wie Figur 5 zeigt, hat der Keil 7 zwei seitliche Wangen 16, 17, mit denen er über die Seitenflächen des Keiles 6 zu greifen vermag, so daß der Keil 7 auf dem Keil 6 gehalten ist und nicht zur Seite hin wegrutschen kann. Beide Wangen 16, 17 weisen in einem hochgezogenen Bereich eine zur gelenkigen Verbindung der Laschen 8, 9 dienende Bohrung 18 auf. In Figur 4 erkennt man eine eine Hypotenuse 19 bildende Keilfläche, mit der der Keil 7 auf einer entsprechenden, in Figur 3 positionierten, eine Keilfläche bildende Hypotenuse 20 des Keiles 6 aufliegt.

### Auflistung der verwendeten Bezugszeichen

- 1: Träger
- 2: Kolben-Zylinder-Einheit
- 3: Kolben-Zylinder-Einheit
- 4: Grundkörper
- 5: Zylinder
- 6: Keil
- 7: Keil
- 8: Lasche
- 9: Lasche
- 10: Gelenk
- 11: Gelenk
- 12: Kolben
- 13: Kolbenstange
- 14: Druckmitteleinlaß
- 15: Führungszunge
- 16: Wange
- 17: Wange
- 18: Bohrung
- 19: Hypotenuse
- 20: Hypotenuse
- 21: Druckmitteleinlaß

## Patentansprüche

1. Spannvorrichtung für eine in einem Rahmen angeordnete Preßplatte einer Kabeldurchführung, wobei die Vorrichtung zwei mit ihrer jeweiligen Hypotenuse (19, 20) aufeinanderliegende, relativ zueinander mittels einer Betätigungseinheit verschiebbare, zwischen den zu spreizenden Teilen einschiebbare Keile (6, 7) aufweist, **dadurch gekennzeichnet,** daß die Spannvorrichtung als Betätigungseinheit eine Kolben-Zylinder-Einheit (2, 3) hat, daß einer der Keile (6) unmittelbar an der Kolbenstange (13) der Kolben-Zylinder-Einheit (2, 3) befestigt und zum Spreizen der Keile (6, 7) von der Kolben-Zylinder-Einheit (2, 3) weg beweglich ist und der zweite, auf der Hypotenuse dieses Keiles (6) aufliegende Keil (7) mittels einer mit dem zweiten Keil (7) und der Kolben-Zylinder-Einheit (2, 3) gelenkig verbundenen Lasche (8, 9) auf dem ersten Keil (6) gehalten ist.

2. Spannvorrichtung nach Anspruch 1, **dadurch gekennzeichnet,** daß der erste Keil (6) auf einer an der Kolben-Zylinder-Einheit (2, 3) befestigten Führungszunge (15) verschieblich gehalten ist.

3. Spannvorrichtung nach den Ansprüchen 1 oder 2, **dadurch gekennzeichnet,** daß der zweite Keil (7) mit zwei seitlichen Wangen (16, 17) über die Seitenflächen des ersten Keiles (6) geführt und an jeder Wange (16, 17) jeweils eine Lasche (8, 9) gelenkig angeschlossen ist.

4. Spannvorrichtung nach zumindest einem der vorangehenden Ansprüche, **dadurch gekennzeichnet,** daß zum Rückbewegen der Keile (6, 7) der kolbenstangenseitige Raum der Kolben-Zylinder-Einheit (2, 3) druckbeaufschlagbar ausgebildet ist.

5. Spannvorrichtung nach zumindest einem der vorangehenden Ansprüche, **dadurch gekennzeichnet,** daß auf einem Träger (1) parallel nebeneinander zwei Kolben-Zylinder-Einheiten (2, 3) mit den aufeinander verschiebbaren Keilen (6, 7) vorgesehen sind.

6. Spannvorrichtung nach zumindest einem der vorangehenden Ansprüche, **dadurch gekennzeichnet,** daß sie so ausgeführt ist, daß sie nach dem Spannen der Preßplatte und Entspannen der Spannvorrichtung aus dem Rahmen herausziehbar ist.

## Claims

1. Clamping device for a press plate arranged in a frame of a cable bushing, wherein the device has two wedges (6, 7) which rest on one another with their respective hypotenuse (19, 20), are displacablerelative to one another by means of an actuating unit and can be inserted between the parts to be spread, characterised in that the clamping device has a piston cylinder unit (2, 3) as actuating unit, one of the wedges (6) is fastened directly on the piston rod (13) of the piston cylinder unit (2, 3) and is movable away from the piston cylinder unit (2, 3) in order to spread the wedges (6, 7) and the second wedge (7) resting on the hypotenuse of this wedge (6) is held on the first wedge (6) by means of a plate (8, 9) articulated to the second wedge (7) and the piston cylinder unit (2, 3).

2. Clamping device according to claim 1, characterised in that the first wedge (6) is displacably held on a guide tongue (15) fastened on the piston cylinder unit (2, 3).

3. Clamping device according to claims 1 or 2, characterised in that the second wedge (7) is guided by two lateral cheeks (16, 17) over the lateral faces of the first wedge (6) and a respective plate (8, 9) is articulated to each cheek (16, 17).

4. Clamping device according to at least one of the preceding claims, characterised in that, in order to move back the wedges (6, 7), the piston rod-side chamber of the piston cylinder unit (2, 3) is pressure-loadable in design.

5. Clamping device according to at least one of the preceding claims, characterised in that two piston cylinder units (2, 3) with the wedges (6, 7) which can be displaced on one another are provided next to one another in parallel on a carrier (1).

6. Clamping device according to at least one of the preceding claims, characterised in that it is designed in such a way that it can be removed from the frame after clamping of the press plate and release of the clamping device.

## Revendications

1. Dispositif de serrage pour une plaque de compression d'un passe-câble disposée dans un cadre, ledit dispositif présentant deux clavettes (6, 7) superposées par leurs hypoténuses respectives (19, 20) coulissables l'une par rapport à l'autre entre les parties à écarter au moyen d'une unité de commande, caractérisé en ce que ladite unité de commande du dispositif de serrage est une unité cylindre-piston (2, 3), que l'une des clavettes (6) est fixée directement sur la tige de piston (13) de ladite unité cylindre-piston (2, 3) et, dans le but d'écarter les clavettes (6, 7) peut être éloignée de cette unité (2, 3), et en ce que la deuxième clavette (7), qui s'applique sur l'hypoténuse de la première clavette (6), est maintenue sur cette première clavette (6) au moyen d'une attache (8, 9) articulée sur la deuxième clavette (7) ainsi que sur l'unité cylindre-piston (2, 3).

2. Dispositif de serrage selon la revendication 1, caractérisé en ce que la première clavette (6) est maintenue de manière coulissable sur une languette de guidage (15) fixée sur l'unité cylindre-piston (2, 3).

3. Dispositif de serrage selon la revendication 1 ou 2, caractérisé en ce que la deuxième clavette (7) est guidée par deux joues latérales (16, 17) sur les faces latérales de la première clavette (6) et qu'à chaque joue (6, 7) est articulée respectivement une attache (8, 9).

4. Dispositif de serrage selon au moins l'une des revendications précédentes, caractérisé en ce que, en vue du mouvement de retour des clavettes (6, 7), l'espace situé du côté tige de piston dans l'unité cylindre-piston (2, 3) est réalisé de manière à pouvoir être placé sous pression.

5. Dispositif de serrage selon au moins l'une des revendications précédentes, caractérisé en ce que sur un support (1) sont prévues parallèlement côte à côte deux unités cylindre-piston (2, 3) comportant les clavettes (6, 7) coulissables l'une contre l'autre.

6. Dispositif de serrage selon au moins l'une des revendications précédentes, caractérisé en ce qu'il est réalisé de telle sorte qu'après le serrage de la plaque de compression et après avoir été lui-même desserré, il peut être extrait du cadre.
